# FASCICULE DE BREVET EUROPEEN

(11) **EP 4 641 538 B1**
(45) Date de publication et mention de la délivrance du brevet: **30.09.2026**
(21) Numéro de dépôt: 25154255.1
(22) Date de dépôt: 27.01.2025
(51) Int. Cl.: G08B 17/107, G08B 17/113

(54) **COMPTEUR INTÉGRANT UN DISPOSITIF DE DÉTECTION D'INCENDIE**
ZÄHLER MIT INTEGRIERTER BRANDMELDEVORRICHTUNG
COUNTER INCORPORATING FIRE DETECTION DEVICE

(30) Priorité: 31.01.2024 FR 2400948
(43) Date de publication de la demande: 29.10.2025
(73) Titulaire: SAGEMCOM ENERGY & TELECOM SAS, 92270 Bois-Colombes (FR)
(72) Inventeur: TEBOULLE, Henri, 92270 Bois-Colombes (FR); GRINCOURT, Christophe, 92270 Bois-Colombes (FR)
(74) Mandataire: Cabinet Boettcher

(56) Documents cités:
- EP-B1- 1 413 997
- EP-B1- 2 083 406

## Description

L'invention concerne le domaine des compteurs électriques.

### ARRIERE PLAN

Il est possible, bien que cela soit extrêmement peu probable, que l'installation défectueuse d'un compteur électrique soit à l'origine d'un incendie.

Lorsque l'installateur connecte les câbles d'arrivée électrique au bornier du compteur, il positionne les conducteurs dans les bornes de puissance puis effectue un serrage mécanique. Or, s'il a mal serré l'un des câbles, une résistance s'établit au niveau de la borne en question. Cette résistance peut provoquer un échauffement qui, très rarement, peut être à l'origine de l'apparition d'une flamme provoquant un incendie. Ce n'est donc pas le compteur lui-même qui est à l'origine de l'incendie, mais plutôt cette installation défectueuse.

Lorsqu'un incendie survient dans le local dans lequel se trouve le compteur électrique, il est très intéressant que le compteur soit capable de détecter cet incendie et de générer un message d'alarme. Cela permet de prendre rapidement des mesures permettant de limiter les conséquences de l'incendie. Il est aussi très intéressant d'être en mesure de déterminer de manière certaine si c'est le compteur électrique qui est à l'origine de cet incendie (ou plutôt son installation en réalité), ou bien si l'incendie a une autre cause.

On cherche à mettre en œuvre cette double fonction de détection (incendie et origine de l'incendie) dans un compteur, de manière simple et peu onéreuse pour ne pas augmenter les coûts de développement et de fabrication du compteur.

Le document EP 2,083,406 B1 divulgue un compteur électrique comportant :
- un coffret comprenant au moins une première ouverture ;
- un dispositif de détection de fumée positionné dans le coffret et agencé pour détecter des particules de fumée provenant de l'extérieur du compteur et ayant pénétré dans le coffret via la au moins une première ouverture ;
- une unité de traitement positionnée dans le coffret, connectée au dispositif de détection de fumée, et agencée pour détecter un incendie survenant à l'extérieur du compteur en cas de présence de particules de fumée dans le coffret.

Le document EP 1,413,997 B1 décrit un système de détection et de signalement d'un dégagement de fumée et/ou d'un incendie, destiné à être intégré dans un équipement tel qu'une armoire électrique.

### OBJET

L'invention a pour objet :
- de détecter la survenue d'un incendie dans un local dans lequel se trouve un compteur électrique ;
- de déterminer si le compteur est ou non à l'origine de l'incendie ;
- et ce, de manière simple et peu coûteuse.

### RESUME

En vue de la réalisation de ce but, on propose un compteur électrique comportant :
- un coffret comprenant une partie principale, une partie secondaire munie d'au moins une première ouverture, et une cloison séparant la partie principale et la partie secondaire ;
- un dispositif de détection de fumée positionné dans la partie secondaire du coffret et agencé pour détecter des particules de fumée provenant de l'extérieur du compteur et ayant pénétré dans la partie secondaire via la au moins une première ouverture ;
- une unité de traitement positionnée dans la partie principale du coffret, connectée au dispositif de détection de fumée, et agencée pour détecter un incendie survenant à l'extérieur du compteur en cas de présence de particules de fumée dans la partie secondaire du coffret.

Grâce au dispositif de détection de fumée, le compteur peut donc non seulement détecter un incendie, mais aussi fournir une preuve formelle qu'il n'est pas lui-même (ou son installation) à l'origine de l'incendie.

Le dispositif de détection de fumée est très simple et très peu coûteux à mettre en œuvre.

On propose de plus un compteur électrique tel que précédemment décrit, la partie secondaire du coffret étant située dans une portion inférieure du compteur.

On propose de plus un compteur électrique tel que précédemment décrit, la au moins une première ouverture étant positionnée au niveau d'une portion inférieure de la partie secondaire du coffret, le coffret comprenant en outre au moins une deuxième ouverture formée dans la cloison.

On propose de plus un compteur électrique tel que précédemment décrit, dans lequel l'unité de traitement et le dispositif de détection de fumée sont montés sur un même circuit imprimé qui s'étend dans la partie principale et la partie secondaire du coffret.

On propose de plus un compteur électrique tel que précédemment décrit, dans lequel le dispositif de détection de fumée comprend un émetteur de lumière agencé pour émettre des signaux lumineux et un récepteur de lumière, qui sont positionnés dans la partie secondaire du coffret de sorte que :
- lorsque la partie secondaire ne contient pas de particules de fumée, le récepteur de lumière ne détecte pas les signaux lumineux émis par l'émetteur de lumière ;
- lorsque la partie secondaire contient des particules de fumée, les signaux lumineux émis par l'émetteur de lumière sont au moins partiellement réfléchis par lesdites particules de fumée et détectés par le récepteur de lumière.

On propose de plus un compteur électrique tel que précédemment décrit, dans lequel est intégré en outre un capteur de température, l'unité de traitement étant agencée pour évaluer une température ambiante régnant à l'extérieur du compteur à partir de mesures de température produites par le capteur de température, l'unité de traitement étant agencée pour détecter un incendie survenant à l'extérieur du compteur :
- en cas de présence de particules de fumée dans la partie secondaire du coffret ;
- et/ou si la température ambiante est supérieure à un seuil prédéfini.

On propose de plus un compteur électrique tel que précédemment décrit, l'unité de traitement étant agencée pour évaluer la température ambiante à partir des mesures de température et de mesures d'un courant fourni à une installation dont une consommation d'énergie électrique est mesurée par le compteur électrique.

On propose de plus un procédé de détection d'un incendie et d'une origine de l'incendie, mis en œuvre dans l'unité de traitement du compteur tel que précédemment décrit, et comprenant l'étape de détecter un incendie survenant à l'extérieur du compteur en cas de présence de particules de fumée dans la partie secondaire du coffret.

On propose de plus un procédé tel que précédemment décrit, mis en œuvre dans l'unité de traitement du compteur tel que précédemment décrit, et comprenant en outre les étapes de :
- évaluer la température ambiante régnant à l'extérieur du compteur ;
- détecter un incendie survenant à l'extérieur du compteur en cas de présence de particules de fumée dans la partie secondaire du coffret, et/ou si la température ambiante est supérieure à un seuil prédéfini.

On propose de plus un programme d'ordinateur comprenant des instructions qui conduisent l'unité de traitement du compteur tel que précédemment décrit à exécuter les étapes du procédé de détection d'un incendie et de l'origine de l'incendie tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente une vue en perspective du compteur électrique et de son capot ;
[Fig. 2] la figure 2 représente une vue en coupe simplifiée du compteur électrique, selon un plan parallèle à la face avant du compteur ;
[Fig. 3] la figure 3 représente un schéma simplifié du compteur.

### DESCRIPTION DETAILLEE

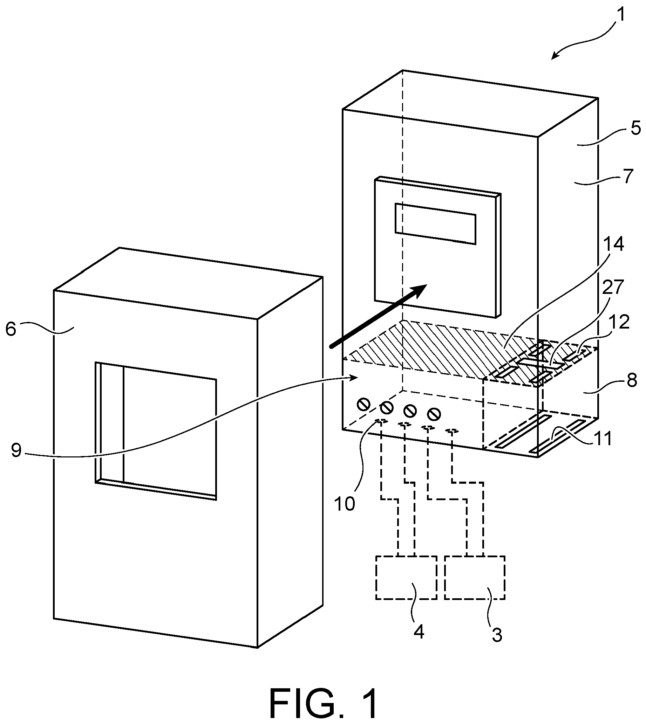

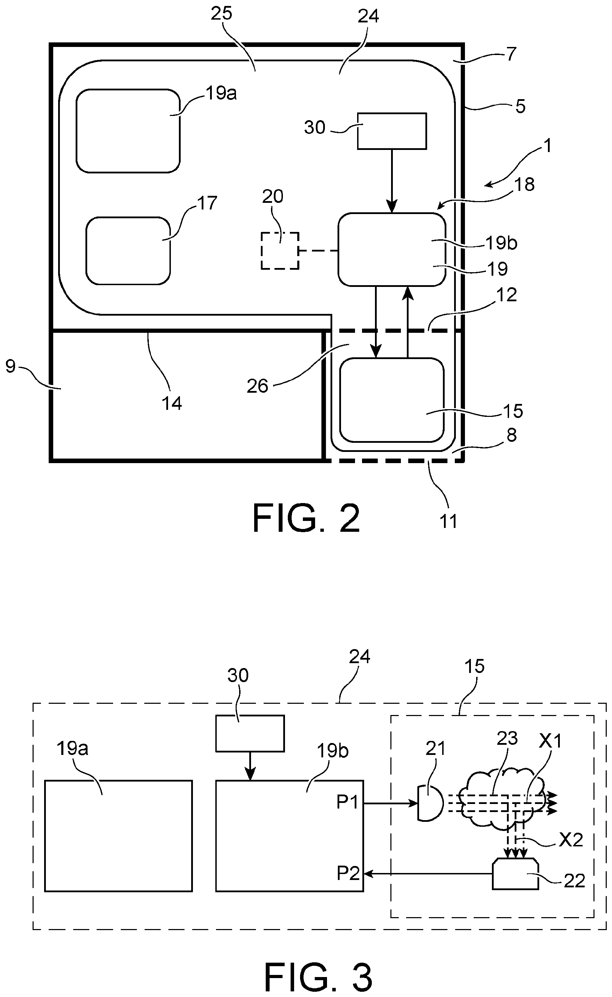

En référence aux figures 1 à 3, le compteur électrique 1 est destiné à mesurer la consommation d'énergie électrique d'une installation 3 et à transmettre les mesures au Système d'Information (SI) du fournisseur d'électricité. Cette énergie électrique est fournie à l'installation 3 par un réseau de distribution 4. Le compteur 1 est ici un compteur monophasé, mais il pourrait s'agir d'un compteur polyphasé.

Le compteur 1 est installé dans un local en étant positionné contre un mur dudit local et fixé au mur.

Le compteur 1 comporte un coffret 5 et un capot amovible 6 (fabriqués en plastique par exemple) . Le coffret 5 comprend une face arrière qui est aussi la face arrière du compteur 1 et qui est destinée à être appliquée contre le mur et fixée au mur. Le capot 6 comprend une face qui est aussi la face avant du compteur 1 et qui est visible et accessible par l'abonné ou par un opérateur.

Ici, tous les termes de position (avant, arrière, supérieure, inférieure, haut, bas, etc.) doivent être interprétés en considérant que le compteur 1 est installé dans sa position nominale de fonctionnement (sa face arrière fixée à une surface verticale).

Le coffret 5 est d'un seul tenant. Il comporte une partie principale 7, définissant un volume principal à l'intérieur du coffret 5, une partie secondaire 8, définissant un volume secondaire à l'intérieur du coffret 5, et un bornier 9.

La partie secondaire 8 et le bornier 9 sont situés sous la partie principale 7, c'est-à-dire que la partie principale 7 est située dans une portion supérieure du compteur 1 et la partie secondaire 8 et le bornier 9 sont situés dans une portion inférieure du compteur 1.

Ici, la partie secondaire 8 et le bornier 9 sont situés l'un à côté de l'autre, à peu près à la même hauteur.

La partie principale 7 contient la plupart des composants électriques et électroniques du compteur 1.

Le bornier 9 est accessible en retirant le capot 6 (ainsi qu'un autre capot, non représenté, verrouillé et plombé), et comprend des bornes de puissance 10 auxquelles sont connectés les câbles d'arrivée électrique (reliés au réseau 4) et les câbles reliés à l'installation 3.

La partie secondaire 8 a une forme parallélépipédique et comprend au moins une ouverture, et avantageusement au moins une première ouverture 11 (en l'occurrence plusieurs) et au moins une deuxième ouverture 12 (en l'occurrence plusieurs).

Les premières ouvertures 11 sont positionnées au niveau d'une portion inférieure de la partie secondaire 8 du coffret 5. Ici, les premières ouvertures 11 sont formées dans une face inférieure du coffret 5. Les deuxièmes ouvertures 12 sont formées dans une cloison de séparation 14 (ici une cloison horizontale) séparant la partie principale 7 et la partie secondaire 8 du coffret 5.

Les premières ouvertures 11 forment une entrée d'air, par laquelle de l'air peut pénétrer dans la partie secondaire 8 du coffret 5.

Les deuxièmes ouvertures 12 forment une sortie d'air, par laquelle l'air peut sortir de la partie secondaire 8 du coffret.

Les premières ouvertures 11 et les deuxièmes ouvertures 12 confèrent à la partie secondaire 8 du coffret 5 une forme de « cage ».

L'entrée d'air et la sortie d'air créent une circulation d'air. Ainsi, lorsque de la fumée est présente dans le local à l'extérieur du compteur 1, dans l'environnement du compteur 1, cette fumée s'engouffre dans la partie secondaire 8 via l'entrée d'air et y est emprisonnée. Cette cage intègre un dispositif de détection de fumée 15.

La cloison de séparation 14 empêche donc la fumée de pénétrer massivement dans la partie principale 7 du coffret 5, mais le permet quand même par le bas, de manière limitée.

Cette cloison de séparation 14 est importante car la partie principale 7 du compteur 1 doit être protégée des fumées et impuretés diverses. La protection doit respecter les exigences de l'indice de protection IP51 si le compteur 1 est destiné à être installé à l'intérieur, et IP54 si le compteur 1 est destiné à être installé à l'extérieur. Par contre, la zone vers le bornier 9 en bas du compteur 1, là où se situe également la partie secondaire 8, ne doit être que IP2x, ce qui est beaucoup moins contraignant et ce qui accepte la présence massive de fumée en particulier.

On s'intéresse maintenant aux composants électriques et électroniques du compteur.

Le compteur 1 comporte des capteurs (non représentés) permettant de mesurer l'énergie électrique consommée par l'installation 3. Ces capteurs mesurent en particulier le courant circulant au travers du compteur 1 (fourni par le réseau 4 à l'installation 3) et la tension appliquée par le réseau 4 en entrée de l'installation 3 (et du compteur 1).

Le compteur 1 comporte aussi un organe de coupure 17 qui est destiné à couper sélectivement le courant fourni à l'installation 3. L'organe de coupure 17 comprend un interrupteur pour chaque phase du réseau de distribution 4 (ici un seul interrupteur).

Le compteur 1 comporte de plus une unité de traitement 18 (électronique et logicielle). L'unité de traitement 18 comprend au moins un composant de traitement 19, qui est par exemple un processeur « généraliste », un processeur spécialisé dans le traitement du signal (ou DSP, pour *Digital Signal Processor),* un microcontrôleur, ou bien un circuit logique programmable tel qu'un FPGA (pour *Field Programmable Gate Arrays)* ou un ASIC (pour *Application Specific Integrated Circuit*). L'unité de traitement 18 comprend aussi une ou des mémoires 20, reliées à ou intégrées dans le composant de traitement. Au moins l'une de ces mémoires 20 forme un support d'enregistrement lisible par ordinateur, sur lequel est enregistré au moins un programme d'ordinateur comprenant des instructions qui conduisent l'unité de traitement 18 à exécuter les étapes du procédé de détection d'un incendie et de son origine, qui sera décrit plus bas.

Ici, l'unité de traitement 18 comprend un microcontrôleur « métrologie » 19a qui, notamment, acquiert les mesures réalisées par les capteurs du compteur 1 et réalise certains traitements sur lesdites mesures, et un microcontrôleur « application » 19b qui, notamment, pilote l'organe de coupure 17. C'est aussi dans le microcontrôleur application 19b qu'est mis en œuvre le procédé de détection d'un incendie et de son origine.

Le dispositif de détection de fumée 15 permet de détecter la présence ou l'absence de fumée à l'extérieur du compteur 1.

Le dispositif de détection de fumée 15 comprend un émetteur de lumière, en l'occurrence une diode électroluminescente 21 (LED), et un récepteur de lumière, en l'occurrence une photodiode 22. La LED 21 génère ici une lumière infrarouge (par exemple de longueur d'onde égale à 860 nm), que peut détecter la photodiode 22 lorsque les rayons lumineux atteignent sa cellule sensible.

La LED 21 émet des signaux lumineux 23. La LED 21 et la photodiode 22 sont positionnées dans la partie secondaire 8 du coffret 5 de sorte que :
- lorsque la partie secondaire 8 ne contient pas de particules de fumée, la photodiode 22 ne détecte pas les signaux lumineux 23 émis par la LED 21 ;
- lorsque la partie secondaire 8 contient des particules de fumée, les signaux lumineux 23 émis par la LED 21 sont au moins partiellement réfléchis par lesdites particules de fumée et détectés par la photodiode 22.

Ici, la LED 21 et la photodiode 22 sont positionnées dans la partie secondaire 8 du coffret 5 de sorte que la LED 21 émet des signaux lumineux 23 selon un premier axe X1, et la photodiode 22 détecte de manière optimale des signaux lumineux arrivant sur sa cellule sensible selon un deuxième axe X2 qui est perpendiculaire au premier axe X1. Ainsi, en l'absence de particules de fumée dans la partie secondaire 8, la photodiode 22 ne détecte pas les signaux lumineux émis par la LED 21. Par contre, en présence de particules de fumée, une partie des signaux lumineux émis par la LED 21 sont réfléchis par les particules de fumée et atteignent la photodiode 22.

La photodiode 22 produit en sortie un signal électrique binaire.

En l'absence de fumée, ce signal binaire prend une première valeur.

Lorsque la quantité de particules de fumée présentes dans la partie secondaire 8 dépasse un certain seuil, le signal électrique binaire prend une deuxième valeur.

Le microcontrôleur application 19b comprend un port P1 connecté à la LED 21 et un port P2 connecté à la photodiode 22. Le microcontrôleur 19b produit régulièrement une tension qu'il applique aux bornes de la LED 21 via le port P1 pour que celle-ci émette des signaux lumineux, et acquiert via le port P2 le signal électrique binaire produit par la photodiode 22 pour détecter l'absence ou la présence de fumée dans la partie secondaire 8 du coffret 5, et donc dans le local.

Le microcontrôleur application 19b détecte donc un incendie survenant à l'extérieur du compteur 1 en cas de présence de particules de fumée dans la partie secondaire 8 du coffret 5.

Ici, les composants électroniques de l'unité de traitement 18, l'organe de coupure 17 et les composants du dispositif de détection de fumée 15, sont montés sur un même circuit imprimé 24 positionné dans le coffret 5 parallèlement à la face avant de celui-ci.

Le circuit imprimé 24 comprend donc une portion principale 25, sur laquelle sont montés notamment le microcontrôleur métrologie 19a, le microcontrôleur application 19b, et l'organe de coupure 17, et une portion secondaire 26, sur laquelle sont montées notamment la LED 21 et la photodiode 22.

Le circuit imprimé est d'un seul tenant et a ici une forme « en L » : la portion principale 25 du circuit imprimé 24 a la forme d'un rectangle, et la portion secondaire 26 du circuit imprimé 24 a aussi la forme d'un rectangle de dimensions réduites ayant un côté qui s'étend dans le prolongement d'un côté de la portion principale.

La portion principale 25 du circuit imprimé 24 est positionnée dans la partie principale 7 du coffret 5 et la portion secondaire 26 du circuit imprimé 24 est positionnée dans la partie secondaire 8 du coffret 5.

Le circuit imprimé 24 passe au travers de la cloison de séparation 14 via une ouverture 27 (visible sur la figure 1) prévue à cet effet. Le circuit imprimé 24 est directement en contact avec la cloison 14 au niveau de cette ouverture.

Avantageusement, le compteur 1 utilise aussi une information de température fournie par un capteur de température intégré dans le compteur.

Le capteur de température est en l'occurrence une thermistance 30 de type CTN (pour *Coefficient de Température Négatif*).

La thermistance 30 est montée sur le circuit imprimé 24 et est située à un point non chaud dans le coffret 5. Elle est donc éloignée de l'organe de coupure 17. Ici, la thermistance 30 est située à proximité d'un premier coin de la portion principale 25 du circuit imprimé 24 et l'organe de coupure 17 est situé à proximité d'un deuxième coin de la portion principale 25 du circuit imprimé 24, le premier coin et le deuxième coin étant diagonalement opposés.

Cette thermistance 30 peut être utilisée pour évaluer la température ambiante régnant dans le local à l'extérieur du compteur 1.

La température mesurée par la thermistance 30 n'est pas directement la température ambiante, mais une image de cette dernière.

L'écart entre la température mesurée par la thermistance 30 et la température ambiante est fonction du courant *I* circulant au travers du compteur 1 (et consommé par l'installation 3), et donc via l'organe de coupure 17. Le courant *I* provoque un échauffement interne dans le compteur 1 qui par diffusion va agir sur la température mesurée par la thermistance 30 et ce, quelle que soit la température ambiante.

L'unité de traitement 18 est donc agencée pour évaluer la température ambiante à partir des mesures de température produites par la thermistance 30 et de mesures du courant fourni à l'installation 3 dont la consommation d'énergie électrique est mesurée par le compteur électrique 1.

La température *Θ* mesurée par la thermistance 30 est donc fonction de la température ambiante *Tamb* (ambiante autour du compteur 1 dans son environnement extérieur dans le local où il se trouve) et de la valeur du courant *I* (qui peut aller typiquement de 0 à 100 A, et qui peut être égale à 200 A aux USA) : $Θ = Tamb + ΔT + K ∗ {I}^{2}$

ΔT étant déterminé par conception et typiquement égal à 10 °C, et K étant un facteur déterminé également par conception et étant tel que, typiquement : $K = 0 , 025 ° C / {A}^{2}$

A titre d'exemple, si on a un courant de 60 A traversant le compteur 1, on aura un écart entre *Θ* et *Tamb* de : $\left(10+0.025∗{60}^{2}\right) = 19 ° C .$

Le microcontrôleur application 19b mesure donc la résistance de la thermistance 30, en déduit la température *Θ*, puis déduit de la température *Θ* la température ambiante *Tamb.* Le microcontrôleur application 19b peut donc estimer en temps réel la température ambiante *Tamb.*

Le microcontrôleur application 19b détecte alors un incendie survenant à l'extérieur du compteur 1 :
- en cas de présence de particules de fumée dans la partie secondaire 8 du coffret 5 ;
- et/ou si la température ambiante est supérieure à un seuil prédéfini.

Le seuil prédéfini est par exemple égal à 60°C.

Le microcontrôleur application 19b déclenche une première alarme dans le cas de la présence de particules de fumée. Le microcontrôleur application 19b déclenche une deuxième alarme dans le cas d'une température anormalement élevée.

Si l'une de ces alarmes est déclenchée (ou les deux), le compteur 1 détecte un incendie. Le compteur 1 envoie alors un message d'alarme correspondant au HES (pour *Head End System)* du SI du fournisseur d'électricité. Le message d'alarme peut être un premier message d'alarme indiquant « température ambiante anormalement élevée », ou bien un deuxième message d'alarme indiquant « présence de fumée ». Les deux messages d'alarme peuvent être envoyés simultanément.

Comme on l'a vu, un incendie va généralement provoquer le déclenchement d'au moins l'une des deux alarmes voire les deux. Le compteur 1 va donc signaler, via le ou les messages d'alarme, qu'il détecte un probable incendie dans son environnement avant qu'il ne soit lui-même détruit.

L'envoi et la réception de ce ou ces messages d'alarme constituent une preuve formelle que le compteur 1 lui-même n'est pas à l'origine de l'incendie, et permettent de mettre le compteur 1 hors de cause. En effet, si l'incendie a pour origine le compteur 1 (ou plutôt son installation défectueuse a priori), le compteur 1 ne va pas détecter immédiatement une température ambiante anormalement élevée ni de la fumée car il se consume de l'intérieur. Il n'aura donc pas le temps d'envoyer un message d'alarme au HES du SI car il sera détruit avant. Le fait que le HES ait reçu au moins un des deux messages d'alarme lui permet de mettre hors de cause le compteur 1 en cas d'incendie.

Bien entendu, l'invention n'est pas limitée au mode de réalisation décrit mais englobe toute variante entrant dans le champ de l'invention tel que défini par les revendications.

La forme du coffret du compteur et, notamment, de sa partie principale et de sa partie secondaire, pourrait être différente de celle décrite ici.

C'est aussi le cas pour le circuit imprimé. Les composants du dispositif de détection de fumée pourraient être montés sur un circuit imprimé distinct de celui de la partie principale du coffret.

Le dispositif de détection de fumée pourrait être différent. La longueur d'onde des signaux lumineux émis pourrait être différente. Les composants utilisés pourraient être différents (par exemple, un phototransistor au lieu d'une photodiode). Plus généralement, toute type de technologie peut être utilisé (par exemple un détecteur optique linéaire).

## Revendications

1. Compteur électrique (1) comportant :
- un coffret (5) comprenant une partie principale (7),une partie secondaire (8) munie d'au moins une première ouverture (11), et une cloison (14) séparant la partie principale (7) et la partie secondaire (8) ;
- un dispositif de détection de fumée (15) positionné dans la partie secondaire (8) du coffret et agencé pour détecter des particules de fumée provenant de l'extérieur du compteur et ayant pénétré dans la partie secondaire via la au moins une première ouverture ;
- une unité de traitement (18) positionnée dans la partie principale du coffret, connectée au dispositif de détection de fumée, et agencée pour détecter un incendie survenant à l'extérieur du compteur en cas de présence de particules de fumée dans la partie secondaire du coffret.

2. Compteur électrique selon la revendication 1, la partie secondaire (8) du coffret étant située dans une portion inférieure du compteur.

3. Compteur électrique selon l'une des revendications précédentes, la au moins une première ouverture (11) étant positionnée au niveau d'une portion inférieure de la partie secondaire du coffret, le coffret comprenant en outre au moins une deuxième ouverture (12) formée dans la cloison (14).

4. Compteur électrique selon l'une des revendications précédentes, dans lequel l'unité de traitement et le dispositif de détection de fumée sont montés sur un même circuit imprimé (24) qui s'étend dans la partie principale (7) et la partie secondaire (8) du coffret (5).

5. Compteur électrique selon l'une des revendications précédentes, dans lequel le dispositif de détection de fumée (15) comprend un émetteur de lumière (21) agencé pour émettre des signaux lumineux (23) et un récepteur de lumière (22), qui sont positionnés dans la partie secondaire (8) du coffret (5) de sorte que :
- lorsque la partie secondaire ne contient pas de particules de fumée, le récepteur de lumière ne détecte pas les signaux lumineux émis par l'émetteur de lumière ;
- lorsque la partie secondaire contient des particules de fumée, les signaux lumineux émis par l'émetteur de lumière sont au moins partiellement réfléchis par lesdites particules de fumée et détectés par le récepteur de lumière.

6. Compteur électrique selon l'une des revendications précédentes, dans lequel est intégré en outre un capteur de température (30), l'unité de traitement (18) étant agencée pour évaluer une température ambiante régnant à l'extérieur du compteur à partir de mesures de température produites par le capteur de température, l'unité de traitement étant agencée pour détecter un incendie survenant à l'extérieur du compteur :
- en cas de présence de particules de fumée dans la partie secondaire du coffret ;
- et/ou si la température ambiante est supérieure à un seuil prédéfini.

7. Compteur électrique selon la revendication 6, l'unité de traitement (18) étant agencée pour évaluer la température ambiante à partir des mesures de température et de mesures d'un courant fourni à une installation (3) dont une consommation d'énergie électrique est mesurée par le compteur électrique.

8. Procédé de détection d'un incendie et d'une origine de l'incendie, mis en œuvre dans l'unité de traitement (18) du compteur selon l'une des revendications 1 à 5, et comprenant l'étape de détecter un incendie survenant à l'extérieur du compteur en cas de présence de particules de fumée dans la partie secondaire (8) du coffret (5).

9. Procédé selon la revendication 8, mis en œuvre dans l'unité de traitement du compteur selon l'une des revendications 6 ou 7, et comprenant en outre les étapes de :
- évaluer la température ambiante régnant à l'extérieur du compteur (1) ;
- détecter un incendie survenant à l'extérieur du compteur en cas de présence de particules de fumée dans la partie secondaire du coffret, et/ou si la température ambiante est supérieure à un seuil prédéfini.

10. Programme d'ordinateur comprenant des instructions qui conduisent l'unité de traitement (18) du compteur selon l'une des revendications 1 à 5 à exécuter les étapes du procédé de détection d'un incendie et de l'origine de l'incendie selon la revendication 8.

11. Support d'enregistrement lisible par ordinateur, sur lequel est enregistré le programme d'ordinateur selon la revendication 10.

## Patentansprüche

1. Stromzähler (1), aufweisend:
- ein Gehäuse (5), der einen Hauptabschnitt (7), einen Nebenabschnitt (8), welcher mit mindestens einer ersten Öffnung (11) versehen ist, und eine Trennwand (14) umfasst, welche den Hauptabschnitt (7) vom Nebenabschnitt (8) trennt;
- eine Rauchdetektionsvorrichtung (15), die im Nebenabschnitt (8) des Gehäuses angeordnet ist und dafür ausgelegt ist, Rauchpartikel zu detektieren, die von außerhalb des Zählers stammen und über die mindestens eine erste Öffnung in den Nebenabschnitt eingedrungen sind;
- eine Verarbeitungseinheit (18), die im Hauptabschnitt des Gehäuses angeordnet ist, wobei sie mit der Rauchdetektionsvorrichtung verbunden ist und dafür ausgelegt ist, im Falle der Vorliegens von Rauchpartikeln in dem Nebenabschnitt des Gehäuses einen Brand zu detektieren, zu dem es außerhalb des Zählers kommt.

2. Stromzähler nach Anspruch 1, wobei der Nebenabschnitt (8) des Gehäuses sich in einem unteren Teilbereich des Zählers befindet.

3. Stromzähler nach einem der vorhergehenden Ansprüche, wobei die mindestens eine erste Öffnung (11) auf Höhe einer eines unteren Teilbereichs des Nebenabschnitts des Gehäuses angeordnet ist, wobei das Gehäuse darüber hinaus mindestens eine zweite Öffnung (12) umfasst, die in der Trennwand (14) ausgebildet ist.

4. Stromzähler nach einem der vorhergehenden Ansprüche, wobei die Verarbeitungseinheit und die Rauchdetektionsvorrichtung auf ein und demselben Schaltkreis (24) angeordnet sind, der sich in dem Hauptabschnitt (7) und dem Nebenabschnitt (8) des Gehäuses (5) erstreckt.

5. Stromzähler nach einem der vorhergehenden Ansprüche, wobei, wobei die Rauchdetektionsvorrichtung (15) eine Lichtquelle (21), die dafür ausgelegt ist, Lichtsignale (23) auszusenden, und einen Lichtempfänger (22) umfasst, wobei diese im Nebenabschnitt (8) des Gehäuses (5) derart angeordnet sind, dass:
- der Lichtempfänger die Lichtsignale, welche von der Lichtquelle ausgesendet wurden, nicht detektiert, wenn der Nebenabschnitt keinerlei Rauchpartikel enthält;
- die Lichtsignale, welche von der Lichtquelle ausgesendet wurden, zumindest teilweise von den Rauchpartikeln reflektiert und von dem Lichtempfänger detektiert werden, wenn der Nebenabschnitt Rauchpartikel enthält.

6. Stromzähler nach einem der vorhergehenden Ansprüche, in welchen darüber hinaus ein Temperatursensor (30) eingebaut ist, wobei die Verarbeitungseinheit (18) dafür ausgelegt ist, eine Umgebungstemperatur, welche außerhalb des Zählers herrscht, ausgehend von Temperaturmessungen zu bewerten, wie sie vom Temperatursensor bereitgestellt werden, wobei die Verarbeitungseinheit dafür ausgelegt ist, einen Brand zu detektieren, zu dem es außerhalb des Zählers kommt:
- wenn Rauchpartikel im Nebenabschnitt des Gehäuses vorliegen;
- und/oder wenn die Umgebungstemperatur oberhalb eines vorbestimmten Schwellenwerts liegt.

7. Stromzähler nach Anspruch 6, wobei die Verarbeitungseinheit (18) dafür ausgelegt ist, die Umgebungstemperatur ausgehend von Temperaturmessungen und Messungen eines Stroms zu bewerten, welcher einer Anlage (3) zugeführt wird, deren Verbrauch an elektrischer Energie von dem Stromzähler gemessen wird.

8. Verfahren zur Detektion eines Brandes und eines Brandursprungs, wobei es in der Verarbeitungseinheit (18) des Zählers nach einem der Ansprüche 1 bis 5 umgesetzt wird und den Schritt umfasst, in welchem ein Brand, zu dem es außerhalb des Zählers kommt, detektiert wird, wenn Rauchpartikel im Nebenabschnitt (8) des Gehäuses (5) vorliegen.

9. Verfahren nach Anspruch 8, wobei es in der Verarbeitungseinheit des Zählers nach einem der Ansprüche 6 oder 7 umgesetzt wird und darüber hinaus die folgenden Schritte umfasst:
- Bewerten der Umgebungstemperatur, die außerhalb des Zählers (1) herrscht;
- Detektieren eines Brandes, zu dem es außerhalb des Zählers kommt, wenn Rauchpartikel im Nebenabschnitt des Gehäuses vorliegen und/oder wenn die Umgebungstemperatur oberhalb eines vorbestimmten Schwellenwerts liegt.

10. Computerprogramm, das Befehle umfasst, welche bewirken, dass die Verarbeitungseinheit (18) des Zählers nach einem der Ansprüche 1 bis 5 die Schritte des Verfahrens zur Detektion eines Brandes und des Brandursprungs nach Anspruch 8 ausführt.

11. Maschinenlesbares Speichermedium, auf welchem das Computerprogramm nach Anspruch 10 gespeichert ist.

## Claims

1. Electricity meter (1) comprising:
- a casing (5) comprising a main part (7), a secondary part (8) which is provided with at least one first opening (11), and a partition (14) separating the main part (7) and the secondary part (8);
- a smoke detection device (15) positioned in the secondary part (8) of the casing and arranged to detect smoke particles that have come from outside the meter and entered the secondary part through the at least one first opening;
- a processing unit (18) positioned in the main part of the casing, connected to the smoke detection device and arranged to detect a fire occurring outside the meter if smoke particles are present in the secondary part of the casing.

2. Electricity meter according to claim 1, the secondary part (8) of the casing being located in a lower portion of the meter.

3. Electricity meter according to any of the preceding claims, the at least one first opening (11) being positioned in the region of a lower portion of the secondary part of the casing, the casing further comprising at least one second opening (12) formed in the partition (14).

4. Electricity meter according to any of the preceding claims, wherein the processing unit and the smoke detection device are mounted on the same printed circuit (24), which extends in the main part (7) and the secondary part (8) of the casing (5).

5. Electricity meter according to any of the preceding claims, wherein the smoke detection device (15) comprises a light emitter (21), arranged to emit light signals (23), and a light receiver (22), which are positioned in the secondary part (8) of the casing (5) such that:
- when the secondary part does not contain smoke particles, the light receiver does not detect the light signals emitted by the light emitter;
- when the secondary part contains smoke particles, the light signals emitted by the light emitter are at least partly reflected by said smoke particles and detected by the light receiver.

6. Electricity meter according to any of the preceding claims, wherein a temperature sensor (30) is also included, the processing unit (18) being arranged to evaluate an ambient temperature outside the meter from temperature measurements produced by the temperature sensor, the processing unit being arranged to detect a fire occurring outside the meter:
- if smoke particles are present in the secondary part of the casing;
- and/or if the ambient temperature is above a predefined threshold.

7. Electricity meter according to claim 6, the processing unit (18) being arranged to evaluate the ambient temperature from the temperature measurements and from measurements of a current supplied to an installation (3), the electrical energy consumption of which is measured by the electricity meter.

8. Method for detecting a fire and a cause of the fire, carried out in the processing unit (18) of the meter according to any of claims 1 to 5 and comprising the step of detecting a fire occurring outside the meter if smoke particles are present in the secondary part (8) of the casing (5).

9. Method according to claim 8, carried out in the processing unit of the meter according to any of claims 6 or 7 and further comprising the steps of:
- evaluating the ambient temperature outside the meter (1);
- detecting a fire occurring outside the meter if smoke particles are present in the secondary part of the casing and/or if the ambient temperature is above a predefined threshold.

10. Computer program comprising instructions that cause the processing unit (18) of the meter according to any of claims 1 to 5 to execute the steps of the method according to claim 8 for detecting a fire and the cause of the fire.

11. Computer-readable storage medium on which the computer program according to claim 10 is stored.
